Europäisches Patentamt

European Patent Office

Office européen des brevets

(19)

(11) Veröffentlichungsnummer : **0 539 322 A1**

(12) # EUROPÄISCHE PATENTANMELDUNG

(21) Anmeldenummer : 92810743.2

(22) Anmeldetag : 02.10.92

(51) Int. Cl.⁵ : **C08J 3/20,** C08J 3/215, C08J 3/22

(30) Priorität : **21.10.91 DE 4134682**

(43) Veröffentlichungstag der Anmeldung :
**28.04.93 Patentblatt 93/17**

(84) Benannte Vertragsstaaten :
**AT BE CH DE DK ES FR GB GR IE IT LI LU MC NL PT SE**

(71) Anmelder : **GEZOLAN AG
Werkstrasse 30
CH-6252 Dagmersellen (CH)**

(72) Erfinder : **Unger, Jacques
Ackerstrasse 90
CH-4800 Zofingen (CH)**

(74) Vertreter : **Rottmann, Maximilian R.
c/o Rottmann, Zimmermann + Partner AG
Glattalstrasse 37
CH-8052 Zürich (CH)**

(54) **Verfahren zur kontinuierlichen Herstellung von hitzevernetzbaren und/oder thermoplastischen Elastomer-Mischungen und Anwendnung des Verfahrens.**

(57)  Hitzevernetzbare und/oder thermoplastische Elastomer-Mischungen, insbesondere vulkanisierbare Kautschuk-Mischungen, werden kontinuierlich hergestellt, indem in einer ersten Stufe in einem Vormischer das Elastomer mit mindestens einem Teil des Weichmachers, und gegebenenfalls mit mindestens einem Teil der übrigen Zusatzstoffe, zu einem Vorgemisch, in welchem das Elastomer aufgeschlossen ist und die Zusatzstoffe in die Polymermatrix eingebunden sind, kontinuierlich vorgemischt wird ; und darauf in einer zweiten Stufe in einem Mischextruder das erhaltene Vorgemisch, allenfalls unter Zugabe der restlichen Zusatzstoffe, kontinuierlich fertiggemischt wird. Es können dabei mindestens ein Teil des Weichmachers und mindestens ein Teil der restlichen Hilfsstoffe in eine oder mehrere Pasten überführt und diese in den Vormischer eingebracht werden. Man kann die Hilfsstoffe aufteilten und daraus mehrere Pasten herstellen. Zweckmässigerweise fasst man Hilfsstoffgruppen, welche für verschiedene Anwendungen gleichbleiben, zu jeweils einer Paste zusammen. Insbesondere können zwei verschiedene Pasten herstellt werden, von denen die eine farbneutral, die andere farbstoffhaltig ist. Anderseits kann auch ein Teil der Hilfstoffe in Pulverform direkt in den Vormischer eingebracht werden, und/oder es kann ein Teil der Hilfsstoffe in Pulver- oder Pastenform direkt in den Mischextruder eingebracht werden. Das Verfahren ist für alle bekannten Elastomere einsetzbar und bietet entscheidende Vorteile technischer, wirtschaftlicher und arbeitshygienischer Art.

EP 0 539 322 A1

Die Erfindung betrifft ein Verfahren zur kontinuierlichen Herstellung von hitzevernetzbaren und/oder thermoplastischen Elastomer-Mischungen.

Als "Thermoplastische Elstomere (TPE)" bezeichnet man bekanntlich Werkstoffe, bei denen elastomere Phasen (als weiche Komponente) in Kunststoffen (als harte Komponente) eingebunden sind. Je nach Art der Einbindung unterscheidet man Block-Copolymere und und Polyblends.

Weiter lassen sich die thermoplastischen Elastomere wie folgt unterteilen:

1 Typen mit hoher Härte
    1.1 Copolyester
    1.2 Polyether-Block-Amide
2 Typen mit niedriger Härte
    2.1 Thermoplastische Polyurethane (TPU)
        2.1.1 Polyetherurethane
        2.1.2 Polyesterurethane
    2.2 Thermoplastische Polyolefine (TPO)
        2.2.1 Ethylen-Propylen-Dien-Elastomer/Polypropylen (EPDM/PP)
        2.2.2 Acrylnitril-Butadien-Copolymer/Polypropylen (NBR/PP)
    2.3 Styrol-Block-Copolymere
        2.3.1 Styrol-Butadien-Styrol-Dreiblockcopolymer (SBS)
        2.3.2 Styrol-Ethylen/Butylen-Styrol-Dreiblockcopolymer (SEBS)

Die Herstellung von vernetzbaren und/oder thermoplastischen Elastomer-Mischungen, insbesondere von vulkanisierbaren Kautschuk-Mischungen, erfolgte bisher in aller Regel chargenweise, sei es:

(a) auf einem 2-Walzen-Walzwerk; oder vorzugsweise

(b) in einem Innenmischer.

Bei der Variante (a) bestand das Walzwerk aus zwei parallelen, horizontal angeordneten heiz- und kühlbaren Hohlwalzen. Zum Mischen wurde der Rohkautschuk in groben Stücken auf die Walze gegeben und so lange verarbeitet, bis er ein glattes Fell ergab. Anschliessend wurden die Verarbeitungs- und Vulkanisations-Hilfsstoffe chargenweise zugegeben, die Walzfelle wiederholt durch Schneiden homogenisiert und schliesslich in Wasser gekühlt, um ein vorzeitiges Vulkanisieren zu verhindern.

Die Verwendung eines Innenmischers nach Variante (b) ergab zwar eine höhere Mischgeschwindigkeit und einen intensiveren Mischeffekt. In der geschlossenen Mischkammer drehten sich zwei heiz- bzw. kühlbare Knetschaufeln gegeneinander. Bei den angewendeten Umdrehungszahlen erwärmte sich die Rohkautschuk-Mischung im Innenmischer jedoch stark, so dass bei vielen Mischungsrezepturen keine Vernetzungsreagentien zugesetzt werden konnten. Es war daher vielfach notwendig, entweder

- ein Walzwerk nachzuschalten, auf dem erst die aus dem Innenmischer entnommene Rohmischung mit Schwefel und Beschleunigern versetzt wurde,

    oder aber

- in einem ersten Mischdurchgang im Innenmischer eine Vormischung ohne Schwefel und Beschleuniger herzustellen, diese dann abzukühlen und anschliessend in einem zweiten Mischdurchgang im Innenmischer unter Zugabe von Schwefel und Beschleunigern die fertige Mischung herzustellen.

Neben der Wirksamkeit des Mischaggregates hatte die Reihenfolge und der Zeitpunkt der Zugabe der Hilfsstoffe einen entscheidenden Einfluss auf die Qualität des Elastomers. So waren schwer einmischbare und die Vernetzung nicht initiierende Weichmacher und die Füllstoffe zuerst und die Vulkanisationsagentien erst am Schluss zuzugeben.

Die Versuche, eine kontinuierliche Mischung in Mischextrudern zu erzielen scheiterten bisher an dem erwähnten Zwang der Einhaltung dieser Reihenfolge. Berechnungen ergaben, dass dabei Spindellängen der Grössenordnung 40°D (wobei D den Spindeldurchmesser bedeutet) notwendig wären. Dies ist technisch schwierig zu bewerkstelligen und wirtschaftlich uninteressant.

Weiter war der Einsatz von weichgemachten Elastomeren oder der Zusatz grösserer Mengen an Weichmachern kritisch, da dann die in der Mischung erzeugbaren Scherkräfte für eine ordnungsgemässe Vermischung nicht mehr ausreichten.

Die der Erfindung zugrunde liegende Aufgabe war nun die Beseitigung der erwähnten Nachteile und die Schaffung eines Verfahrens, welche die kontinuierliche Herstellung von hitzevernetzbaren und/oder thermoplastischen Elastomer-Mischungen, insbesondere vulkanisierbaren Kautschuk-Mischungen, in einfachen Mischern und Mischextrudern erlaubt.

Diese Aufgabe wird erfindungsgemäss dadurch gelöst, dass

- in einer ersten Stufe in einem Vormischer das Elastomer mit mindestens einem Teil des Weichmachers, und gegebenenfalls mit mindestens einem Teil der übrigen Zusatzstoffe, zu einem Vorgemisch, in welchem das Elastomer aufgeschlossen ist und die Zusatzstoffe in die Polymermatrix eingebunden sind, kontinuierlich vorgemischt wird;
und darauf

- in einer zweiten Stufe in einem Mischextruder das erhaltene Vorgemisch, allenfalls unter Zugabe der restlichen Zusatzstoffe, kontinuierlich fertiggemischt wird.

Dabei übernimmt der Vormischer die Aufgabe, das Elastomer soweit aufzuschliessen, dass ein Vermischen mit den Hilfsstoffen möglich wird, und damit einen Grossteil des Mischvorganges, während im Mischextruder nur noch ein Nachmischen stattfindet. Diese Feststellung war in hohem Masse überraschend.

Als Hilfsstoffe kommen dabei alle bekannten Hilfstoffgruppen in Frage, nämlich:

1 Vernetzungssysteme, insbesondere Vulkanisationsmittel.

2 Füllstoffe, und zwar:

2.1 aktive Füllstoffe, welche eine massgebliche Verbesserung der mechanischen Eigenschaften, besonders der Zug-und Abreibfestigkeit, ergeben, beispielsweise aktive Russtypen, Kieselsäure, Aluminium- und Calciumsilikat sowie Zinkoxid; oder

2.2 inaktive Füllstoffe, welche keine qualitative Verbesserung der Vulkanisate ergeben, beispielsweise Calcium-und Magnesiumcarbonat, Kaolin, Schwerspat, Kieselgur und verschiedene Tone;

2.3 bei nicht russgefüllten Elastomeren: Farbstoffe, und zwar:

2.3.1 anorganische Pigmente, beispielsweise Lithopone, Titandioxid, Eisenoxid, Chromoxidgrün; oder

2.3.2 organische Farbstoffe, beispielsweise Azo-, Alizarin- und Phthalocyanin-Farbstoffe.

3 Weichmacher zur Verbesserung der Verarbeitbarkeit, der Elastizität und des Kälteverhaltens, und zwar:

3.1 für unpolare oder schwach polare Rohkautschuk-Typen (beispielsweise Naturkautschuk (NR), Styrol-Butadien-Copolymere (SBR), Polybutadien (BR), Isobutylen-Isopren-Copolymere (IIR)): Mineralölprodukte;

3.2 für stärker polare Typen (beispielsweise Acrylnitril-Butadien-Copolymere (NBR) und Polychlorbutatadien (CR): Phthalsäureester (beispielsweise Dibutyl- und Dioctyl-phthalat), Phosphorsäureester (beispielsweise Trikresylphosphat) und aromatische Mineralöle.

3.3 Weitere Verarbeitungshilfsstoffe, beispielsweise Faktisse (d.h. mit Schwefel oder Chlorschwefel behandelte pflanzliche öle), Wollfett, Weichparaffin, Weich-Polyethylen, Bitumen und Pech.

4 Alterungsschutzmittel zur Verbesserung der Beständigkeit des fertigen Vulkanisates gegenüber Sauerstoff, Lichteinwirkung und dynamischer Beanspruchung, und zwar:

4.1 zum Schutz von Elsatomeren, deren Makromoleküle Doppelbindungen enthalten, gegen Sauerstoff und Ozon: Antioxydantien, beispielsweise Amine oder Phenole;

4.2 Lichtschutzmittel, insbesondere paraffinische Substanzen, beispielsweise Ceresin und Ozokerit;

4.3 zur Verzögerung der Hydrolyse von zur Hydrolyse neigenden Elastomeren (beispielsweise Polyurethan-Elastomeren (PU) und Ethylen-Vinylacetat-Copolymeren (EVA)): Polycarbodiimine.

5 Sonstige Hilfsstoffe, und zwar:

5.1 Mittel zur Beeinflussung der Klebrigkeit, nämlich:

5.1.1 Mittel, welche das unerwünschte Ankleben des Rohkautschukes bei der Verarbeitung vermindern, beispielsweise Paraffin, Wollfett, Stearinsäure und deren Salze;

5.1.2 Mittel, welche die Klebrigkeit des Rohkautschukes beim Konfektionieren verbessern, beispielsweise Kolophonium, Cumaronharze, Alkylphenol-Acetylen -Kondensate sowie niedermolekulare Polyethylene.

5.2 Haftmittel, welche notwendig sind zur Herstellung fester Verbindungen von Elastomeren und Metallen sowie von Verbundmaterialien mit Geweben, beispielsweise bei Reifenkonstruktionen und für Tranportbänder, und zwar:

5.2.1 zur der Herstellung metallischer Verbundmaterialien: beispielsweise Kobaltnaphthenat, Resorcinharz sowie erhöhte Schwefelmengen;

5.2.2 zur Herstellung textiler Verbundmaterialien: beispielsweise Styrol-Butadien-Vinylpyridin-Terpolymere zusammen mit Resorcin-Formaldehyd-Harzen und speziellen Isocyanaten.

5.3 Treibmittel für die Herstellung von porösen Vulkanisaten, beispielsweise Sulfohydrazide (wie Benzolsulfohydrazid), Nitrosoverbindungen (wie Dinitrosopentamethylentetramin oder Ammoniumbicarbonat.

Die Hilfsstoffe können in aller Regel in den handelsüblichen Korngrössen im my-Bereich eingesetzt werden. Durch ihren Einsatz in Pastenform wird die Möglichkeit geschaffen, sie zu veredeln, insbesondere feinstzumahlen, zu dispergieren oder zu entgasen. Dadurch können grobkörnigere und daher billigere Hilfsstoffe, beispielsweise Russe, eingesetzt werden.

Bei der Durchführung des erfindungsgemässen Verfahrens kann so vorgegangen werden, dass mindestens ein Teil des Weichmachers und mindestens ein Teil der restlichen Hilfsstoffe in eine oder mehrere Pasten überführt wird und diese in den Vormischer eingebracht wird bzw. werden.

Wenn aus den erwähnten Hilfsstoffen Pasten hergestellt werden sollen, ist es selbstverständlich notwendig, dass die Menge der flüssigen Hilfsstoffe, insbesondere der Weichmacher, hoch genug ist.

Man kann dabei so vorgehen, dass aus sämtlichen Hilfsstoffen eine einzige Paste hergestellt wird, welche in den Vormischer eingebracht wird.

Man kann aber auch so vorgehen, dass die Hilfsstoffe aufgeteilt und daraus mehrere Pasten, beispielsweise zwei Pasten, hergestellt werden, welche dann einzeln oder nach vorheriger Vermischung in den Vormischer eingebracht werden. Zweckmässigerweise fasst man Hilfsstoffgruppen, welche für verschiedene Anwendungen gleichbleiben, zu jeweils einer Paste zusammen. Beispielsweise kann man bei zwei Pasten die eine Paste farbneutral und die andere Paste farbstoffhaltig herstellen. Auf diese Weise kann erreicht werden dass die farbneutrale Paste für die Herstellung verschieden gefärbter Elastomer-Mischungen eingesetzt werden kann und nur die farbstoffhaltige Paste dem jeweiligen Farbton angepasst werden muss.

Da das homogene Vermischen verschiedener Bestandteile umso leichter möglich ist, je gleicher die einzelnen Mengen einander sind, ist es zweckmässig, aus Hilfstoffen, welche nur in vergleichsweise geringen Mengen benötigt werden, zunächst eine Vorpaste herzustellen und diese vor dem Vermischen mit dem Elastomer mit der anderen bzw. einer der anderen Pasten zu vermischen.

Anderseits kann auch ein Teil der Hilfstoffe in Pulverform direkt in den Vormischer eingebracht werden, und/oder es kann ein Teil der Hilfsstoffe direkt in den Mischextruder eingebracht werden. Letzteres ist insbesondere dann sinnvoll, wenn Mischungen, beispielsweise Reifenmischungen, hergestellt werden sollen, bei denen die Menge an Weichmacher im Verhältnis zu den Füllstoffen gering ist.

Als Vormischer setzt man zweckmässigerweise einen kontinuierlich arbeitenden Turbulent-Mischer von hoher Drehzahl, beispielsweise 2000 U/min, ein. Vorzugsweise verwendet man einen Ringschichtmischer. Diese Mischvorrichtung weist bekanntlich als Mischelement eine Welle mit Zacken auf, welche in einem glatten Rohr mit hoher Geschwindigkeit rotiert. Dadurch wird an der Rohrwand eine turbulente Ringschicht erzeugt, wobei in dieser Zone der Aufschluss des Elastomers und dessen Vermischung mit den übrigen Bestandteilen praktisch ausschliesslich durch die infolge der Turbulenz entstehenden hohen Reibungskräfte bewerkstelligt wird.

Das erfindungsgemässe Verfahren kann für die Herstellung von vernetzbaren und/oder thermoplastischen Elastomer-Mischungen aus allen bekannten vernetzbaren oder thermoplastischen Elastomeren Anwendung finden, insbesondere solchen aus:

- Naturkautschuk (NR),
- sythetischem cis-1,4-Polyisopren (IR),
- cis-1,4-Polybutadien (BR),
- Styrol-Butatien-Copolymer (SBR),
- Acrylnitril-Butadien-Copolymeren (NBR),
- Poly-2-chlorbutatadien (CR),
- Isobutylen-Isopren-Copolymeren (IIR),
- Ethylen-Propylen-Dien-Terpolymeren (EPDM),
- Ethylen-Propylen-Copolymeren (EPM),
- Ethylen-Vinylacetat-Copolymeren (EVA),
- Polyurethan-Elastomeren (PU),
- Polysulfid-Elastomeren (PSR),
- Polyacrylat-Elastomeren (AR),
- Polyepichlorhydrin-Elastomeren (CHR),
- Sulfochloriertem Polyethylen (CSM),
- Fluor-Elastomeren (FE),
- Silicon-Elastomeren (SIR),
- 1,5-trans-Polypentenamer (TPR),
- Ethylen-Propylen-Dien-Elastomer/Polypropylen-Polyblend (EPDM/PP),
- Acrylnitril-Butadien-Copolymer/Polypropylen-Polyblend (NBR/PP),
- Styrol-Butadien-Styrol-Dreiblockcopolymer (SBS),
- Styrol-Ethylen/Butylen-Styrol-Dreiblockcopolymer (SEBS).

Zur Herstellung handelsfähiger Halbprodukte wird die erhaltene Mischung anschliessend an den Mischvorgang zweckmässig kontinuierlich pelletiert, und die dabei erhaltenen Pellets werden zweckmässig, je nach deren Verwendungszweck, entweder sogleich:

- zwecks Vulkanisation bzw. Vernetzung kontinuierlich erhitzt,

     oder aber

- zwecks Verhinderung einer Vulkanisation bzw. Vernetzung kontinuierlich gekühlt.

Die aus dem Mischextruder austretende Elastomer-Mischung kann aber auch direkt der endgültigen Formgebung zugeführt werden, beispielsweise einer Spritzmaschine oder einem Kalander.

Das erfindungsgemässe Verfahren weist im Vergleich zum erwähnten Stand der Technik eine ganze Anzahl entscheidender Vorteile auf:

- Die Vermischung der Hilfsstoffe ist äusserst einfach und energiesparend.
- Der für das Fertigmischen notwendige Mischextruder, d.h. ein Extruder mit einer Mischzone, kann infolge der Tatsache, dass nur eine niedrigen Umdrehungszahl, beispielsweise 100 U/min, notwendig ist, einfach und leicht gebaut sein. Eine Spindellänge von 12°D bis 18°D ist durchaus ausreichend. Derartige Mischextruder weisen im Vergleich zu den Mischvorrichtungen nach dem Stand der Technik einen äusserst grossen Durchsatz auf.
- Gleichzeitig ist das Vermischen äusserst energiesparend, da das Elastomer bereits in Pulver- oder Granulat-Form vorliegt und nicht erst durch Wärme fliessbar oder knetbar gemacht werden muss. Dementsprechend entfällt die bisher notwendige mechanische Überdimensionierung der Mischvorrichtung.
- Das bisherige Problem einer Nachbehandlung infolge Blasenbildung entfällt. Es genügt eine kurze Entgasungstrecke im Mischextruder. Ein typischer Mischextruder kann beispielsweise folgende Bereiche aufweisen:

| | |
|---|---|
| - Materialzugabe (Vorgemisch + allfällige Pulver) : | 2°D |
| - Mischen: | 4°D |
| - Entgasung: | 4°D |
| - Mischen: | 4°D |
| - Gesamtlänge: | 14°D |

- Die eingesetzten Elastomere können an sich weichmacherfrei sein. Dies erleichtert nicht nur ihre Pulverisierung bzw. Granulierung, sondern vermeidet auch, dass infolge zu niedriger Scherkräfte eine wirksame Vermischung nicht mehr stattfinden kann.
- In arbeitshygienischer Hinsicht ist wesentlich, dass am Vormischer und am Mischextruder staubfrei gearbeitet werden kann.

Beispiele 1 bis 3

Aus den folgenden Bestandteilen werden in der nachstehend beschriebenen Weise drei vulkanisierbare Kautschuk-Mischungen hergestellt.

| Nr. | Komponente | Gew.-Teile | Gew.-Teile |
|-----|-----------|------------|------------|
| 1 | BUNA AP 447 [1] | | 100,0 |
| 2 | Zinkoxid RS | | 5,0 |
| 3.1 | Stearinsäure | 1,0 | |
| 3.2 | Stearinsäure | 1,0 | |
| 3 | Total Stearinsäure | | 2,0 |
| 4 | Kreide | | 250,0 |
| 5.1 | Paraffin./naphthen. Mineralöl | 70,0 | |
| 5.2 | Paraffin./naphthen. Mineralöl | 10,0 | |
| 5 | Total Paraffin./naphthen. Mineralöl | | 80,0 |
| 6 | Eisenoxidrot | | 6,0 |
| 7 | Schwefel | | 7,0 |
| 8 | VULKACIT CZ [2] | | 1,0 |
| 9 | VULCACIT LDA [3] | | 1,0 |
| 10 | VULCACIT Thiuram [4] | | 0,4 |
| Total | | | 452,4 |

[1]   EDPM

= Ethylen-Propylen-Dien-Terpolymer Korngrösse < 10 mm

[2]   CBS

= Benzodiacyl-2-cyclohexyl-sulfenamid

[3]   ZDEC

= Zink-N-diethyl-dithiocarbamat

[4]   TMTB

= Tetramethyl-thiuramdisulfid

Beispiel 1

Sämtliche Hilfsstoffe (Nr. 2, 3, 4, 5, 6, 7, 8, 9 und 10) werden zu einer einzigen Paste vermischt. Diese Paste wird, gegebenenfalls nach anschliessender Homogenisierung, zusammen mit dem Elastomer (Nr. 1) in einem Ringschichtmischer unter Aufschluss des Elastomers vorgemischt. Darauf wird das erhaltene Vorgemisch in den Materialzufuhrbereich eines Mischextruders eingebracht.

Beispiel 2

Die Hilfsstoffe Nr. 2, 3.1, 4, 5.1, 7, 8, 9 und 10 werden zu einer farbneutralen Paste und die Hilfsstoffe Nr. 3.2, 5.2 und 6 zu einer farbstoffhaltigen Paste vermischt. Diese Pasten werden, gegebenenfalls nach vorgängiger Homogenisierung, mit dem Elastomer (Nr. 1) in einem Ringschichtmischer unter Aufschluss des Elastomers vorgemischt. Darauf wird das erhaltene Vorgemisch in den Materialzufuhrbereich eines Mischextruders eingebracht.

Beispiel 3

Die Hilfsstoffe Nr. 2, 3, 7, 8, 9 und 10 werden zu einer Vorpaste und die Hilfsstoffe Nr. 4, 5 und 6 zu einer Hauptpaste vermischt. Dann werden die beiden Pasten vereinigt. Die vereinigte einzige Paste wird, gegebenenfalls nach anschliessender Homogenisierung, mit dem Elastomer (Nr. 1) in einem Ringschichtmischer unter Aufschluss des Elastomers vorgemischt. Darauf wird das erhaltene Vorgemisch in den Materialzufuhrbereich eines Mischextruders eingebracht.

Beispiel 4

Eine typische Reifenmischung wird hergestellt aus:

| 100 | Gew.-Teilen Kautschuk, |
|---|---|
| 10 | Gew.-Teilen Weichmacheröl, |
| 60 bis 80 | Gew.-Teilen Russ, und |
| 8 bis 10 | Gew.-Teilen übrige Hilfsstoffe (einschliesslich Schwefel). |

Dabei werden der Kauschuk, das Weichmacheröl und die übrigen Hilfsstoffe in einem mit 2000 U/min rotierenden Ringschichtmischer kontinuierlich vorgemischt. Die erhaltene Masse wie auch der Russ werden dann in einen Mischextruder eingebracht. Dort wird das Elastomergemisch fertiggemischt.

**Patentansprüche**

1. Verfahren zur kontinuierlichen Herstellung von hitzevernetzbaren und/oder thermoplastischen Elastomer-Mischungen durch zweistufiges Mischen des in Pulver- oder Granulatform vorliegende Elastomers mit Weichmacheröl und anderen Zusatzstoffen, dadurch gekennzeichnet, dass
   - in einer ersten Stufe in einem Vormischer das Elastomer mit mindestens einem Teil des Weichmachers, und gegebenenfalls mit mindestens einem Teil der übrigen Zusatzstoffe, zu einem Vorgemisch, in welchem das Elastomer aufgeschlossen ist und die Zusatzstoffe in die Polymermatrix eingebunden sind, kontinuierlich vorgemischt wird;
       und darauf
   - in einer zweiten Stufe in einem Mischextruder das erhaltene Vorgemisch, allenfalls unter Zugabe der restlichen Zusatzstoffe, kontinuierlich fertiggemischt wird.

2. Verfahren nach Anspruch 1, dadurch gekennzeichnet, dass mindestens ein Teil des Weichmachers und mindestens ein Teil der restlichen Zusatzstoffe in eine oder mehrere Pasten überführt wird und diese in den Vormischer der ersten Stufe eingebracht wird bzw. werden.

3. Verfahren nach Anspruch 2, dadurch gekennzeichnet, dass aus sämtlichen Zusatzstoffen eine einzige Paste hergestellt und in den Vormischer der ersten Stufe eingebracht wird.

4. Verfahren nach Anspruch 2, dadurch gekennzeichnet, dass die Zusatzstoffe aufgeteilt und daraus mehrere Pasten, insbesondere zwei Pasten, hergestellt und in den Vormischer der ersten Stufe eingebracht werden.

5. Verfahren nach Anspruch 4, dadurch gekennzeichnet, dass eine Paste farbneutral und eine andere Paste farbstoffhaltig hergestellt wird.

6. Verfahren nach Anspruch 3 oder 4, dadurch gekennzeichnet, dass die Paste bzw. Pasten vor dem Einbringen, insbesondere durch Feistmahlen, Dispergieren oder Entgasen, veredelt wird bzw. werden.

7. Verfahren nach einem oder mehreren der Ansprüche 4 bis 6, dadurch gekennzeichnet, dass die Pasten einzeln in den Vormischer eingebracht werden.

8. Verfahren nach einem oder mehreren der Ansprüche 4 bis 6, dadurch gekennzeichnet, dass aus einem Teil der Zusatzstoffe eine Vorpaste hergestellt und diese vor dem Einbringen in den Vormischer der ersten Stufe mit der anderen bzw. einer der anderen Pasten vermischt wird.

9. Verfahren nach Anspruch 1 oder 2, dadurch gekennzeichnet, dass ein Teil der Zusatzstoffe in Pulverform direkt in den Vormischer der ersten Stufe eingebracht wird.

10. Verfahren nach einem der Ansprüche 1, 2 oder 9, dadurch gekennzeichnet, dass ein Teil der Zusatzstoffe in Pulver- oder Pastenform direkt in den Mischextruder der zweiten Stufe eingebracht wird.

**Europäisches Patentamt**

## EUROPÄISCHER RECHERCHENBERICHT

Nummer der Anmeldung

EP    92 81 0743

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 184 276 (PLASTIC SPECIALTIES AND TECHNOLOGIES) <br> * Ansprüche 5,7,13 * <br> --- | 1,9 | C08J3/20 <br> C08J3/215 <br> C08J3/22 |
| A | US-A-2 868 517 (LASCH ALBERT) <br> * Ansprüche 1,2 * <br> * Spalte 1, Zeile 14 - Zeile 23 * <br> * Spalte 2, Zeile 7 - Zeile 16 * <br> * Abbildung 1 * <br> --- | 1 | |
| A | GB-A-956 508 (DRAISWERKE G.M.B.H.) <br> * Ansprüche 1,2,4 * <br> ----- | 1 | |

**RECHERCHIERTE SACHGEBIETE (Int. Cl.5 )**

C08J
B29C
B29B
B01F

Der vorliegende Recherchenbericht wurde für alle Patentansprüche erstellt

| Recherchenort | Abschlußdatum der Recherche | Prüfer |
|---|---|---|
| DEN HAAG | 04 JANUAR 1993 | NIAOUNAKIS M. |

EPO FORM 1503 03.82 (P0403)